(19) Europäisches Patentamt
European Patent Office
Office européen des brevets

(11) **EP 1 036 302 B1**

(12) **EUROPÄISCHE PATENTSCHRIFT**

(45) Veröffentlichungstag und Bekanntmachung des Hinweises auf die Patenterteilung:
**24.03.2004 Patentblatt 2004/13**

(21) Anmeldenummer: **98961100.9**

(22) Anmeldetag: **15.10.1998**

(51) Int Cl.⁷: $G01C\ 19/72$, $G02F\ 1/035$

(86) Internationale Anmeldenummer:
**PCT/EP1998/006553**

(87) Internationale Veröffentlichungsnummer:
**WO 1999/028707 (10.06.1999 Gazette 1999/23)**

(54) **DIGITALER PHASENMODULATOR**

DIGITAL PHASE MODULATOR

MODULATEUR DE PHASE NUMERIQUE

(84) Benannte Vertragsstaaten:
**FR GB**

(30) Priorität: **02.12.1997 DE 19753427**

(43) Veröffentlichungstag der Anmeldung:
**20.09.2000 Patentblatt 2000/38**

(73) Patentinhaber: **LITEF GmbH**
**79115 Freiburg (DE)**

(72) Erfinder:
• **RIBES, Mauricio**
**Vitacura Santiago (CL)**

• **TAZARTES, Daniel, A.**
**West Hills, CA 91304 (US)**
• **MARK, John, G.**
**Pasadena, CA 91106 (US)**

(74) Vertreter: **Müller, Frithjof E., Dipl.-Ing. et al**
**Müller Hoffmann & Partner**
**Patentanwälte**
**Innere Wiener Strasse 17**
**81667 München (DE)**

(56) Entgegenhaltungen:
DE-A- 4 019 474        GB-A- 2 185 123
US-A- 4 288 785        US-A- 5 137 359
US-A- 5 400 142

**Beschreibung**

Die Erfindung betrifft ein Verfahren sowie eine Einrichtung zur Erhöhung der Genauigkeit eines digitalen aus binärgewichteten (Flächen-)Elektroden aufgebauten, bit-parallel anzusteuernden Phasenmodulators innerhalb einer faseroptischen Signalübertragungs- oder Meßeinrichtung, insbesondere für einen faseroptischen Drehratensensor (FOG - Fiber Optic Gyroscope).

Digitale Phasenmodulatoren. wie sie als Bestandteil eines integriert-optischen Chips für FOGs in US 5,137,359 oder US 5,400,142 beschrieben sind, bieten den Vorteil, daß sich technisch sehr aufwendige, präzise und rauscharme Hochgeschwindigkeits-D/A-Wandler mit den zusätzlich erforderlichen sehr linearen Treiberverstärkern vermeiden lassen. Das sich aus einem vorprogrammierten Algorithmus beispielsweise innerhalb eines Regelkreises bei FOGs mit geschlossener Regelschleife ergebende Digitalsignal kann dann direkt binärgewichteten Elektroden des Phasenmodulators zugeführt werden. Die Herstellung hochgenauer Phasenmodulatoren mit mehr als 8 Bit Auflösung ist aufwendig und teuer. Für hochgenaue FOGs mit einer Stabilität von etwa 1°/h ist jedoch eine Auflösung von mindestens 10 bis 12 Bit erforderlich. Dies stellt vergleichsweise extreme Anforderungen an die Herstellungsgenauigkeit des integriert-optischen Chips sowie dessen Temperatur- und Alterungsbeständigkeit.

Der Erfindung liegt damit die Aufgabe zugrunde, die herstellungs- und betriebstechnischen Anforderungen an digitale Phasenmodulatoren der genannten Art zu reduzieren, ohne Einbußen bei der Genauigkeit in Kauf nehmen zu müssen.

Die Erfindung besteht bei einem Verfahren zur Erhöhung der Genauigkeit eines digitalen aus binärgewichteten Flächenelektroden aufgebauten. bit-parallel anzusteuernden Phasenmodulators innerhalb einer faseroptischen Signalübertragungs- oder Meßeinrichtung, vorzugsweise eines faseroptischen Interferometers, darin, daß den Elektroden des Phasenmodulators individuell zuordenbare Korrekturwerte in einer Speichertabelle abgelegt werden und daß bei Aktivierung des Phasenmodulators das Elektrodenansteuersignal entsprechend den für die zu aktivierenden Elektroden maßgeblichen, gespeicherten Korrekturwerten korrigiert wird.

Vorteilhaft ist es die Korrekturwerte für die für jede Ansteuerung des Phasenmodulators zu aktivierenden Elektroden mit Hilfe der gespeicherten Korrekturwerte für jede zu aktivierende Elektrode zu errechnen und diese Korrekturwerte durch Verknüpfung mit einem für die betreffende Ansteuerung maßgeblichen, vorgegebenen Elektrodenansteuersignal in ein korrigiertes Elektrodenansteuersignal umzurechnen und die so korrigierten Ansteuersignale bit-parallel auf die Elektroden zu schalten. Weiterhin ist es vorteilhaft, wenn sich die gespeicherten Korrekturwerte zur Berücksichtigung von betriebs- oder alterungsbedingten Änderungen der elektrischen Eigenschaften der digitalen Elektroden des Phasenmodulators innerhalb der Speichertabelle ändern lassen.

Bei einer besonders vorteilhaften Ausführungsvariante der Erfindung ist zur Erhöhung der Auflösung des digitalen bit-parallel anzusteuernden Phasenmodulators mit n binärgewichteten Elektroden innerhalb der faseroptischen Signalübertragungs- oder Meßeinrichtung erfindungsgemäß vorgesehen, daß ein niedersignifikanter Anteil m eines in der Signalübertragungs- oder Meßeinrichtung erzeugten Ansteuersignals für den Phasenmodulator mit einer Auflösung von (n + m) Bit, D/A-gewandelt und als Analogwert auf eine weitere Elektrode des Phasenmodulators geschaltet wird. Dabei können die gespeicherten und/ oder errechneten Korrekturwerte mit dem niedersignifikanten Anteil m des Ansteuersignals verknüpft werden und das dabei erhaltene Digitalsignal wird nach D/A-Wandlung als Analogwert auf die weitere Elektrode des Phasenmodulators geschaltet.

Die Erfindung und vorteilhafte Einzelheiten werden nachfolgend mit Bezug auf die Zeichnung in beispielsweisen Ausführungsformen näher erläutert. Es zeigen:

**Fig. 1**  drei nebeneinander gezeichnete digitale Signalrampen des einen digitalen Phasenmodulator erregenden aus binären Einzelanteilen zusammengesetzten Ansteuersignals;

**Fig. 2**  den Blockschaltbildaufbau einer prinzipiellen Anordnung zur elektronischen Korrektur der einzelnen die binärgewichteten Elektroden des Phasenmodulators beaufschlagenden Binärsignale;

**Fig. 3**  eine der Figur 2 entsprechende Blockschaltbildanordnung mit externer Korrekturmöglichkeit einer Korrekturwerttabelle;

**Fig. 4**  den Blockschaltbildaufbau einer Schaltungsanordnung für den prinzipiellen Aufbau nach Fig. 2. bei der Korrekturterme als Funktion der jeweils zu aktivierenden Elektroden des digitalen Phasenmodulators errechnet werden;

**Fig. 5**  ein Beispiel für den Aufbau des im Blockschaltbild der Fig. 4 vorgesehenen Addierers;

**Fig. 6**  eine Ausführungsvariante der Erfindung, bei der die Genauigkeit eines digitalen Phasenmodulators vergleichsweise geringer Auflösung durch elektronische "Trimmung" wesentlich erhöht wird;

**Fig. 7**  dient zur Verdeutlichung der Korrekturfunktion bei der Anordnung nach Fig. 6 bei Verwendung eines 2 Bit-D/A-Wandlers, dessen Ausgangssignal eine bestimmte Elektrode des digitalen Phasenmodulators beaufschlagt; und

**Fig. 8** eine Ausführungsform für einen hybriden, also einen digital und analog anzusteuernden digitalen Phasenmodulator.

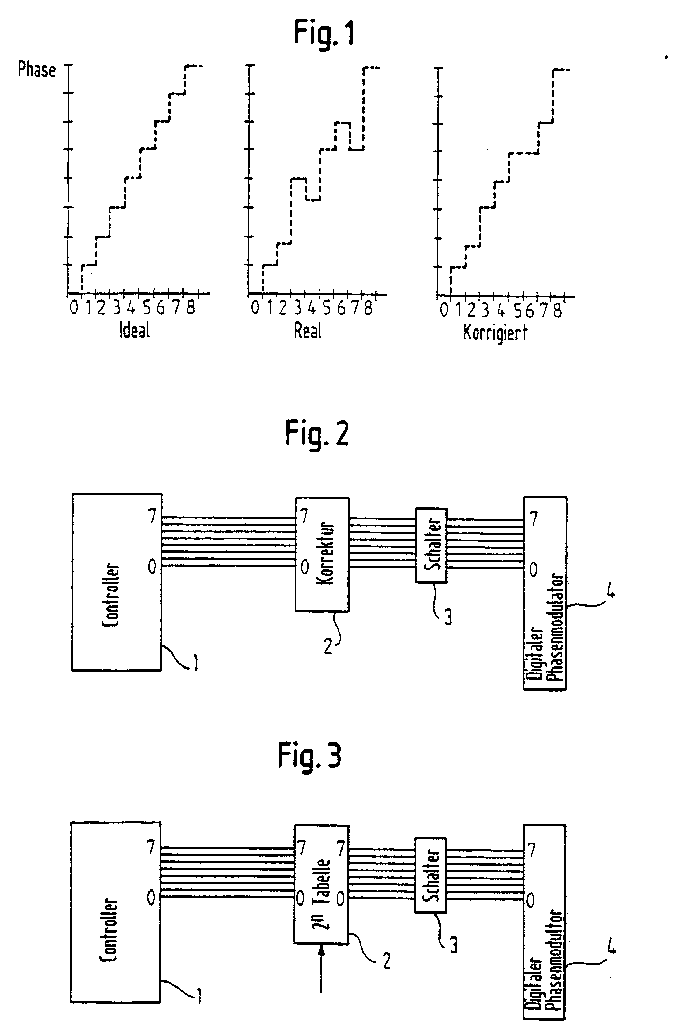

Die drei Signaldiagramme der Figur 1 verdeutlichen zunächst, wie sich herstellungsoder anderweitig bedingte Fehler an einer oder mehreren Elektroden eines digitalen Phasenmodulators, im dargestellten Beispiel mit 8 Bit Auflösung, auswirken, wobei eine entsprechende Ungenauigkeit nur dann bemerkbar wird, wenn eine oder mehrere der fehlerhaften Elektroden aktiviert werden.

Das linke Diagramm in Fig. 1 zeigt die ideale Treppenfunktion (digitale Signalrampe) für den Fall. daß alle Elektroden genau der vorgeschriebenen Größe und gewünschten Funktion entsprechen. Das mittlere Diagramm verdeutlicht eine reale Funktion, die Fehler an einigen der binärgewichteten Elektroden erkennen läßt. Das rechte Diagramm in Fig. 1 schließlich läßt eine im Sinne der Erfindung durch vorprogrammierte, gegebenenfalls änderbare Speicherwerte korrigierte Ansteuerfunktion für den digitalen Phasenmodulator erkennen. Dies läßt sich durch Überwachung der diesen Elektroden zugeordneten Ansteuerleitungen und Hinzufügen eines entsprechenden Korrekturwerts zu den die einzelnen Elektroden beaufschlagenden binärgewichteten Signalen erreichen.

Fig. 2 zeigt den prinzipiellen Aufbau eines digitalen 8-Bit-Phasenmodulators 4 mit zugeordneter Ansteuerschaltung, die als wesentliche Baugruppen einen Controller 1 (Steuereinheit), eine Korrektureinheit 2 und eine Schaltergruppe 3 aufweist.

Gemäß einer ersten Ausführungsform ist eine direkte Korrektur der vom Controller 1 gelieferten binären Ansteuersignale unter Verwendung einer Tabelle vorgesehen, die $2^n$-Werte mit n-Bit-Wortbreite enthält, beispielsweise n = 8. Die vom Controller 1 gelieferten Binärwerte gelangen als Indexeingang auf die Korrekturtabelle 2, an deren Ausgang eine neu zusammengestellte Kombination der binären Ansteuersignale erscheint, die die einzelnen Elektroden des Phasenmodulators mit entsprechend korrigierter Gewichtung beaufschlagen.

Als Linearisierungs- oder Korrekturtabelle, kommen verschiedene Arten elektronischer Speicher in Frage, beispielsweise ROMs, EPROMs, EEPROMs usw., um herstellungsbedingte Alterung oder aufgrund anderweitiger Ursachen verursachte Ungenauigkeiten der Phasenmodulatorelektroden auszugleichen.

Die Fig. 3 läßt erkennen, wie die Korrekturtabelle 2 mit $2^n$-Werten durch externe Eingabe korrigiert bzw. nachgestellt werden kann, um Fehler zu kompensieren, die aufgrund von alterungsbedingten Änderungen, Temperaturänderungen oder anderen Einflüssen nachträglich auftreten und die einen Einfluß auf die Elektroden hinsichtlich der Erzeugung der gewünschten Phasenverschiebung haben. Der extern zugängliche Stelleingang an der Korrektureinheit 2 ist durch einen Pfeil markiert.

Die digitale Fehlerkompensation des Phasenmodulators läßt sich als mathematisches Modell wie folgt darstellen:

Ein idealer Phasenmodulator mit n-Bit-Auflösung läßt sich beschreiben durch die Funktion

$$\psi = \Sigma^{n-1} \, c_i a_i,$$

worin $\psi$ den Phasenmodulationswert, $c_i$ Koeffizienten der Form $k.2^i$ angibt und $a_i$ einen der Werte $\{0.1\}$ annimmt.

Sofern die Elektroden Fehler aufweisen, weicht der durch solche Elektroden erzeugbare reale Modulationswert vom jeweiligen Idealwert ab. Bezeichnet man eine solche Abweichung mit einem Fehlerterm $e_i$, so läßt sich die tatsächliche Phasenmodulation wiedergeben durch

$$\psi = k \, \Sigma^{n-1} \, (2^i - e_i) a_i.$$

Diese Gleichung läßt sich umschreiben zu

$$\psi = k \, \Sigma^{n-1} \, 2^i a_i - k \, \Sigma_0^{n-1} \, e_i a_i.$$

Der Fehler läßt sich also durch Hinzufügen des zweiten Terms der letzteren Gleichung zum Modulatoreingangswert kompensieren.

Zur Implementierung solcher Korrekturwerte werden die die Steuerleitungen zum digitalen Phasenmodulator 4 beaufschlagenden Signale zwischen dem digitalen Controllerausgang und den Eingängen zum Phasenmodulator 4 modifiziert, und zwar durch einen errechneten, der Ungenauigkeit entsprechenden Fehler als Funktion der jeweils aktivierten Elektroden.

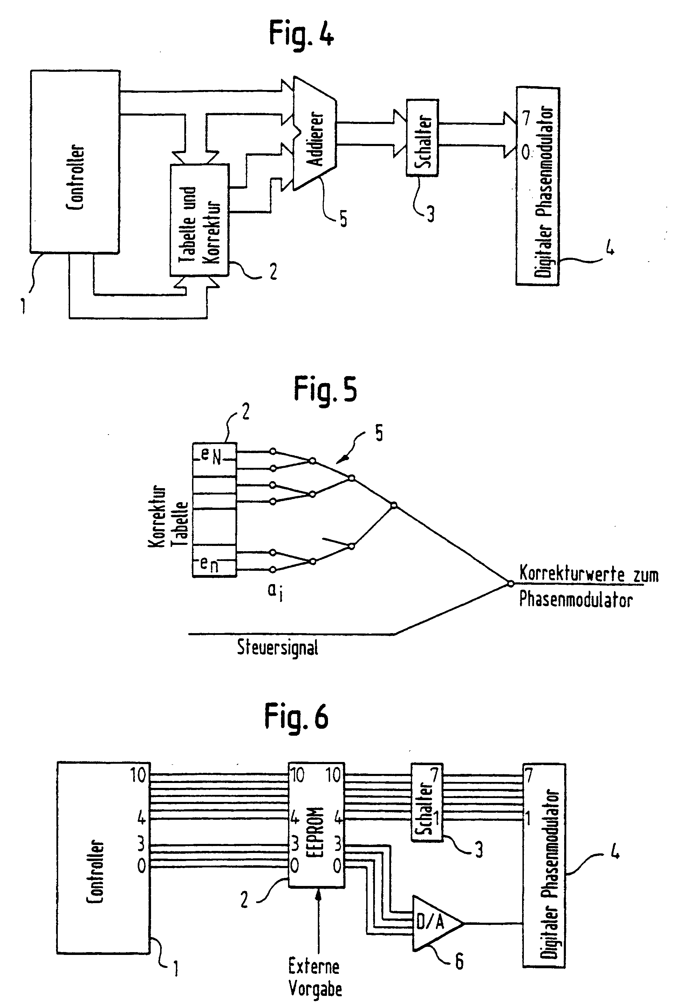

Die Fig. 4 in Verbindung mit der Fig. 5 zeigt einen praktisch realisierten Aufbau mit der Korrekturtabelle 2 und einem Addierer 5, aufgebaut als Addierer-Baum. Der Wert der Abweichung vom Idealwert wird für jede Elektrode in der Korrekturwerttabelle 2 abgelegt. Über den Addierer 5 läßt sich für jeden Fall ein Korrekturwert erzeugen, um die Ungenauigkeiten des Phasenmodulators zu kompensieren.

Wie die Fig. 5 veranschaulicht, werden die Binärwerte $a_i$, die letztlich den Status einer betreffenden i-ten Steuerleitung bestimmen als Korrekturwerte herangezogen, die zu einem bestimmten Zeitpunkt zu den vom Controller 1 gelieferten idealen Werten hinzuaddiert werden. Für diese Lösung wird eine Tabelle von n-Elementen benötigt, die den Korrekturwert für die betreffende Elektrode angibt.

Bei einer in Fig. 6 veranschaulichten Ausführungsvariante wird die Korrekturmethode gemäß der Erfindung verwendet, um die Genauigkeit eines digitalen Phasenmodulators mit vergleichsweise geringer Auflösung durch eine Art Trimmung deutlich zu erhöhen. Das dargestellte Beispiel zeigt einen digitalen 8-Bit-Phasenmodulator, der unter Verwendung eines 4-Bit-D/A-Wandlers, insbesondere bei Anwendung des oben beschriebenen Korrekturverfahrens, auf eine Auflösung von 11 Bit gebracht wird. Ersichtlicherweise wird dabei die niedrigstsignifikante Elektrode durch ein aus den vier LSB-Bits des Controllers 1, gegebenenfalls nach Korrektur über die Speichertabelle 2. erzeugten Analogsignals beaufschlagt.

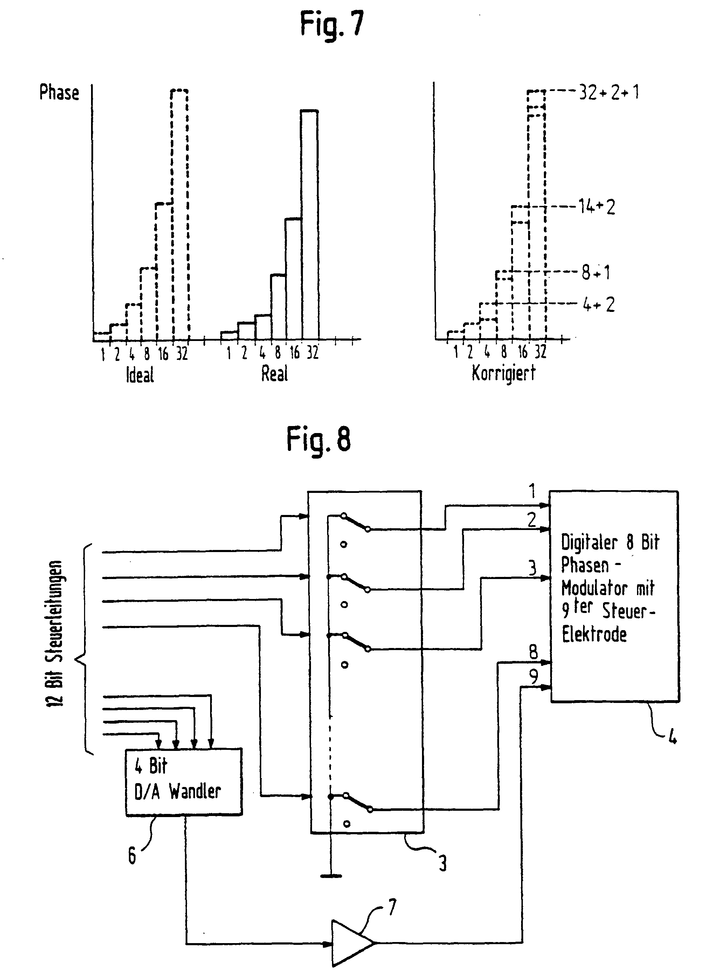

Die Fig. 7 verdeutlicht wie eine entsprechende Korrektur unter Verwendung eines 2-Bit-D/A-Wandlers als unmittelbare Fehlerkorrektur erfolgen kann. In dem linken Diagramm der Fig. 7 sind einerseits die idealen Beträge der einzelnen Elektroden bzw. die vom Controller 1 gelieferten idealen Ansteuersignale und andererseits eine reale Situation dargestellt. Das rechte Diagramm in Fig. 7 verdeutlicht dann die ergänzende Korrektur unter Verwendung des über den D/A-Wandler 6 auf die LSB-Elektrode des digitalen Phasenmodulators als Analogwert eingespeisten und korrigierten 4-Bit-Signals vom Controller 1, wie dargestellt, bezogen auf die vier niedrigstsignifikanten Bits.

Die Fig. 8 verdeutlicht eine für die Praxis bedeutsame weitere vorteilhafte Ausführungsform der Erfindung. Hier wird ein digitaler 8-Bit-Phasenmodulator durch eine neunte separate Steuerelektrode zu einem kombinierten digital-analogen Phasenmodulator für Hybridenansteuerbetrieb ergänzt, wodurch eine wesentlich gesteigerte Auflösung erreicht werden kann ohne nennenswerte Erhöhung des Aufwands beim Phasenmodulatorbaustein einerseits bzw. bei dem verwendeten zusätzlichen D/A-Wandler 6 andererseits, für den wie dargestellt eine Auflösung von 4-Bit ausreichend ist, um insgesamt auf eine äquivalente Ansteuerung von 12 Bit Auflösung am Phasenmodulator 4 zu kommen.

Das Blockschaltbild der Fig. 8 verdeutlicht das Konzept eines Phasenmodulators 4, bei dem die den Leitungen 1 bis 8 zugeordneten entsprechend binärgewichteten Elektroden, gegebenenfalls nach Kompensationskorrektur wie oben beschrieben, direkt durch entsprechende Digitalsignale beaufschlagt werden.

Eine weitere mit dem neunten Eingang des Phasenmodulators 4 verbundene Elektrode ist für die Ansteuerung durch ein aus den vier niedrigsignifikanten Bits (LSB-Bits) vom Controller 1 über den D/A-Wandler 6 und einen zugeordneten Treiberverstärker 7 erzeugtes Signal vorgesehen. Dabei können die die Eingangsleitungen 1 bis 8 beaufschlagenden Binärsignale, wie oben beschrieben, beispielsweise unter Verwendung eines EEPROM Speichers vormodifiziert sein, um Abweichungen der einzelnen Elektroden von der zugedachten Binärgewichtung durch das entsprechende Ansteuersignal auszugleichen.

Der mit der Fig. 8 veranschaulichte Realisierungsvorschlag der Erfindung läßt sich ersichtlicherweise auch auf andere Binärzahlkombinationen sowohl bei der Elektrodenanzahl des Phasenmodulators 4 als auch bei der Auflösung des vom Controller 1 gelieferten Binärsignals anwenden.

**Patentansprüche**

1. Verfahren zur Erhöhung der Genauigkeit eines digitalen, mit binärgewichteten Elektroden realisierten Phasenmodulators innerhalb einer faseroptischen Signalübertragungs- oder Meßeinrichtung, insbesondere faseroptisches Interferometer, **dadurch gekennzeichnet, daß**

   - den Elektroden des Phasenmodulators (4) individuell zuordenbare Korrekturwerte in einer Speichertabelle (2) abgelegt werden und daß
   - bei Aktivierung des Phasenmodulators (4) das Elektrodenansteuersignal entsprechend den für die zu aktivierenden Elektroden maßgeblichen, gespeicherten Korrekturwerten korrigiert wird.

2. Verfahren nach Anspruch 1, **dadurch gekennzeichnet, daß** die Korrekturwerte für die für jede Ansteuerung des Phasenmodulators zu aktivierenden Elektroden mit Hilfe von für jede zu aktivierende Elektrode errechneter und dann in der Speichertabelle (2) abgelegter Korrekturwerte durch Verknüpfung mit einem für die betreffende Ansteuerung maßgeblichen, vorgegebenen Elektrodenansteuersignal in ein korrigiertes Elektrodenansteuersignal umgesetzt werden und daß die so korrigierten Ansteuersignale bit-parallel auf die Elektroden geschaltet werden.

3. Verfahren nach Anspruch 1 oder 2, **dadurch gekennzeichnet, daß** die gespeicherten Korrekturwerte zur Berücksichtigung von betriebs- oder altersbedingten Änderungen der elektrischen Eigenschaften der digitalen Elektroden des Phasenmodulators innerhalb der Speichertabelle änderbar sind.

4. Verfahren nach einem der vorstehenden Ansprüche, **dadurch gekennzeichnet, daß** die Korrekturwerte für die für jede Ansteuerung des Phasenmodulators zu aktivierenden Elektroden D/A-gewandelt und als ein analoger Korrekturwert auf eine separate Elektrode des Phasenmodulators geschaltet werden.

5. Verfahren zur Erhöhung der Auflösung eines digitalen Phasenmodulators mit n-binärgewichteten Elektroden innerhalb einer faseroptischen Signalübertragungs- oder Meßeinrichtung, insbesondere

faseroptisches Interferometer, **dadurch gekennzeichnet, daß** ein niedersignifikanter Anteil m eines in der Signalübertragungs- oder Meßeinrichtung erzeugten digitalen, aus (n + m) Bit bestehenden Ansteuersignals für den Phasenmodulator D/A-gewandelt und als Analogwert auf eine weitere separate Elektrode des Phasenmodulators geschaltet wird.

6. Verfahren nach Anspruch 5, **dadurch gekennzeichnet, daß** die gemäß einem der Ansprüche 1 bis 4 gespeicherten und/oder errechneten Korrekturwerte mit dem niedersignifikanten Anteil m des Ansteuersignals (m + n)verknüpft und das dabei erhaltene Digitalsignal D/A-gewandelt und als Analogwert auf die weitere separate Elektrode des Phasenmodulators geschaltet wird.

7. Einrichtung zur Durchführung des Verfahrens nach einem der Ansprüche 1 bis 3, **gekennzeichnet durch** eine digitale Steuereinheit (1), über welche das einem gewünschten Modulationswert am Phasenmodulator entsprechende digitale Elektrodenansteuersignal bereitgestellt wird, einen Tabellenspeicher (2), der die den einzelnen Elektroden des Phasenmodulators (4) zuzuordnenden Korrekturwerte enthält, die entsprechend einem jeweiligen Elektrodenänsteuersignal von der Steuereinheit (1) aktivierbar und mit dem Elektrodenansteuersignal verknüpft über eine Schalteinrichtung (3) als linearisiertes, korrigiertes digitales Erregersignal auf die jeweils zu aktivierenden Elektroden durchschaltbar sind.

8. Einrichtung nach Anspruch 7, **dadurch gekennzeichnet, daß** der Tabellenspeicher ein ROM, ein PROM, ein EPROM oder ein EEPROM ist.

9. Einrichtung zur Durchführung des Verfahrens nach Anspruch 4 oder einem der Ansprüche 5 oder 6, **gekennzeichnet durch** einen D/A-Wandler (6), an dem eingangsseitig die für jede Ansteuerung des Phasenmodulators maßgeblichen Korrekturwerte zuführbar sind und der ausgangsseitig mit der **durch** das analoge Korrektursignal zu beaufschlagenden separaten Elektrode des Phasenmodulators (4) verbunden ist.

10. Einrichtung zur Durchführung des Verfahrens nach einem der Ansprüche 5 oder 6, **gekennzeichnet durch**

- eine digitale Steuereinheit (1), welche das digitale Ansteuersignal für den Phasenmodulator (4) mit einer Wortlänge von (n+m) Bit bereitstellt,
- einen D/A-Wandler (6), welcher eingangsseitig **durch** den niedersignifikanten Anteil m des Ansteuersignals beaufschlagt ist ausgangsseitig mit der separaten Elektrode des Phasenmodulators (4) verbunden ist, und **durch**

- eine Schalteinrichtung (3), über welche der höhersignifikante Anteil n des korrigierten Ansteuersignals auf die entsprechenden Elektroden des digitalen Phasenmodulators (4) schaltbar ist.

## Claims

1. A method for increasing the accuracy of a digital phase modulator, implemented using binary-weighted electrodes, inside a fiber-optic signal transmitting or measuring device, in particular fiber-optic interferometer, **characterized in that**

- correction values which can be assigned individually to the electrodes of the phase modulator (4) are stored in a memory table (2), and that
- upon activation of the phase modulator (4) the electrode drive signal is corrected in accordance with the stored correction values decisive for the electrode to be activated.

2. The method as claimed in claim 1, **characterized in that** the correction values for the electrodes to be activated for each driving of the phase modulator are converted into a corrected electrode drive signal with the aid of correction values, computed for each electrode to be activated and then stored in the memory table (2), by logical combination with a prescribed electrode drive signal decisive for the relevant driving, and that the drive signals thus corrected are connected in bit-parallel fashion to the electrodes.

3. The method as claimed in claim 1 or 2, **characterized in that** the stored correction values can be modified inside the memory table to take account of operationally induced or age-induced changes in the electric properties of the digital electrodes of the phase modulator.

4. The method as claimed in one of the preceding claims, **characterized in that** the correction values for the electrodes to be activated for each driving of the phase modulator are subjected to D/A conversion and connected as an analog correction value to a separate electrode of the phase modulator.

5. A method for increasing the resolution of a digital phase modulator with n binary-weighted electrodes inside a fiber-optic signal transmitting or measuring device, in particular a fiber-optic interferometer, **characterized in that** a less significant component m of a digital drive signal, generated in the signal transmitting or measuring device and comprising (n + m) bits, for the phase modulator is subjected to D/A conversion and connected as an analog value to a further separate electrode of the phase modulator.

6. The method as claimed in claim 5, **characterized in that** the correction values, stored and/or calculated in accordance with one of claims 1 to 4, are logically combined with the less significant component m of the drive signal (m + n) and the digital signal obtained in the process is subjected to D/A conversion and is connected as an analog value to the further separate electrode of the phase modulator.

7. A device for carrying out the method as claimed in one of claims 1 to 3, **characterized in that** a digital control unit (1), via which the digital electrode drive signal corresponding to a desired modulation value at the phase modulator is provided, a tabular memory (2) which contains the correction values to be assigned to the individual electrodes of the phase modulator (4), which can be switched through via a switching device (3) as a linearized, corrected digital excitation signal to the electrodes respectively to be activated, in a fashion typical of being activated by the control unit (1) in accordance with a respective electrode drive signal, and in a fashion logically combined with the electrode drive signal.

8. The device as claimed in claim 7, **characterized in that** the tabular memory is a ROM, a PROM, an EPROM or an EEPROM.

9. The device for carrying out the method as claimed in claim 4 or one of claims 5 or 6, **characterized by** a D/A converter (6), which on the input side can be fed the correction values decisive for each driving of the phase modulator, and which on the output side is connected to the separate electrode, to which the analog correction signal is to be applied, of the phase modulator (4).

10. The device for carrying out the method as claimed in one of claims 5 or 6, **characterized by**

   - a digital control unit (1) which provides the digital drive signal for the phase modulator (4) with a word length of (n + m) bits,
   - a D/A converter (6) to which on the input side the less significant component m of the drive signal is applied, and which is connected on the output side to the separate electrode of the phase modulator (4), and by
   - a switching device (3) via which the more significant component n of the corrected drive signal can be connected to the corresponding electrodes of the digital phase modulator (4).

## Revendications

1. Procédé pour renforcer la précision d'un modulateur de phase numérique, réalisé avec des électrodes pondérées de façon binaire, à l'intérieur d'un dispositif de transmission de signaux ou de mesure à fibre optique, en particulier un interféromètre à fibre optique, **caractérisé en ce que**

   - des valeurs de correction, pouvant être affectées individuellement aux électrodes du modulateur de phase (4), sont introduites dans une table de mémoire (2) et que
   - lors de l'activation du modulateur de phase (4), le signal d'amorçage d'électrode est corrigé conformément aux valeurs de correction mémorisées, prédominantes pour les électrodes à activer.

2. Procédé selon la revendication 1, **caractérisé en ce que** les valeurs de correction pour les électrodes à activer pour chaque amorçage du modulateur de phase sont converties à l'aide de valeurs de correction, calculées et introduites ensuite dans la table de mémoire (2) pour chaque électrode à activer, par combinaison avec un signal d'amorçage d'électrode prédéfini, prédominant pour l'amorçage concerné, en un signal d'amorçage d'électrode corrigé et que les signaux d'amorçage ainsi corrigés sont commutés en parallèle par bit sur les électrodes.

3. Procédé selon la revendication 1 ou 2, **caractérisé en ce que** les valeurs de correction mémorisées sont modifiables à l'intérieur de la table de mémoire, pour tenir compte de changements d'exploitation et d'ancienneté des propriétés électriques des électrodes numériques du modulateur de phase (4).

4. Procédé selon l'une des revendications qui précèdent, **caractérisé en ce que** les valeurs de correction pour les électrodes à activer pour chaque amorçage du modulateur de phase sont converties N / A et commutées en tant que valeur de correction analogique sur une électrode séparée du modulateur de phase.

5. Procédé pour renforcer la résolution d'un modulateur de phase numérique avec des électrodes pondérées de façon n-binaire à l'intérieur d'un dispositif de transmission de signaux ou de mesure à fibre optique, en particulier un interféromètre à fibre optique, **caractérisé en ce qu'**une proportion peu significative m d'un signal d'amorçage numérique, généré dans le dispositif de transmission de signaux ou de mesure, se composant de (n + m) bits, est converti N / A pour le modulateur de phase et commuté en tant que valeur analogique sur une autre électrode séparée du modulateur de phase.

6. Procédé selon la revendication 5, **caractérisé en ce que**, conformément à l'une des revendications 1 à 4, les valeurs de correction sauvegardées et / ou calculées sont combinées avec la proportion peu significative m du signal d'amorçage (m + n) et que le signal numérique, obtenu ainsi, est converti N / A et commuté en tant que valeur analogique sur l'autre électrode séparée du modulateur de phase.

7. Dispositif pour mettre en oeuvre le procédé selon l'une des revendications 1 à 3, **caractérisé par** une unité d'amorçage numérique (1), par l'intermédiaire de laquelle le signal d'amorçage d'électrode numérique, correspondant à une valeur de modulation souhaitée, est mis à disposition sur le modulateur de phase, une mémoire, sous forme de table à consulter (2), qui contient les valeurs de correction à affecter aux diverses électrodes du modulateur de phase (4), valeurs de correction qui peuvent être activées, conformément à un signal d'amorçage d'électrode respectif, par l'unité d'amorçage (1) et couplées, combinées avec le signal d'amorçage d'électrode, par l'intermédiaire d'un organe de couplage (3), en tant que signal d'excitation numérique, corrigé, linéarisé, sur les électrodes respectivement à activer.

8. Dispositif selon la revendication 7, **caractérisé en ce que** la mémoire, sous forme de table à consulter, est une ROM, une PROM, une EPROM ou une EEPROM.

9. Dispositif pour mettre en oeuvre le procédé selon la revendication 4 ou l'une des revendications 5 ou 6, **caractérisé par** un convertisseur N / A (6), auquel peuvent être amenées, côté entrée, les valeurs de correction prédominantes pour chaque amorçage du modulateur de phase et qui est relié, côté sortie, à l'électrode séparée, à alimenter par le biais du signal de correction analogique, du modulateur de phase (4).

10. Dispositif pour mettre en oeuvre le procédé selon l'une des revendications 5 ou 6, **caractérisé par**

   - une unité d'amorçage numérique (1), qui met à disposition le signal d'amorçage numérique pour le modulateur de phase (4) avec une longueur de mot de (n + m) bits,
   - un convertisseur N / A (6), qui est alimenté, côté entrée, par la proportion peu significative du signal d'amorçage m, qui est relié, côté sortie, à l'électrode séparée du modulateur de phase (4) et par

   - un organe de couplage (3), par l'intermédiaire duquel la proportion plus significative n du signal d'amorçage corrigé peut être commutée sur les électrodes correspondantes du modulateur de phase numérique (4).

# Fig. 1

Phase

Ideal | Real | Korrigiert

0 1 2 3 4 5 6 7 8

# Fig. 2

Controller 1

Korrektur 2

Schalter 3

Digitaler Phasenmodulator 4

# Fig. 3

Controller 1

$2^n$ Tabelle 2

Schalter 3

Digitaler Phasenmodultor 4

## Fig. 4

Controller — 1
Tabelle und Korrektur — 2
Addierer — 5
Schalter — 3
Digitaler Phasenmodulator — 4

## Fig. 5

Korrektur Tabelle — 2
$e_N$
$e_n$
$a_i$
5
Korrekturwerte zum Phasenmodulator
Steuersignal

## Fig. 6

Controller — 1
EEPROM — 2
Externe Vorgabe
Schalter — 3
D/A — 6
Digitaler Phasenmodulator — 4

# Fig. 7

Phase

1 2 4 8 16 32
Ideal

1 2 4 8 16 32
Real

32+2+1

14+2

8+1

4+2

1 2 4 8 16 32
Korrigiert

# Fig. 8

12 Bit Steuerleitungen

4 Bit D/A Wandler

6

3

7

Digitaler 8 Bit Phasen - Modulator mit 9 ter Steuer - Elektrode

1
2
3
8
9

4